# EUROPEAN PATENT SPECIFICATION

(11) **EP 1 250 413 B1**
(45) Date of publication and mention of the grant of the patent: **22.10.2008**
(21) Application number: 01900779.8
(22) Date of filing: 16.01.2001
(51) Int. Cl.: C11D 17/04

(54) **FLOOR CLEANING SHEET**
BODENREINIGUNGSTUCH
LINGETTES DE NETTOYAGE POUR LES SOLS

(30) Priority: 21.01.2000 JP 2000012648; 21.01.2000 JP 2000012649; 21.01.2000 JP 2000012650
(43) Date of publication of application: 23.10.2002
(73) Proprietor: KAO CORPORATION, Tokyo 103-8210 (JP)
(72) Inventor: KAKIUCHI, Shusuke,c/o Kao Corporation, Haga-gun, Tochigi 321-3426 (JP); ISHIKAWA, Kenji,c/o Kao Corporation, Haga-gun, Tochigi 321-3426 (JP); HAYASE, Taeko,c/o Kao Corporation, Haga-gun, Tochigi 321-3426 (JP); AKAI, Hiroyuki,c/o Kao Corporation, Haga-gun, Tochigi 321-3426 (JP)
(74) Representative: Vossius & Partner
(86) International application number: PCT/JP2001/000218
(87) International publication number: WO 2001/052713

(56) References cited:
- EP-A- 0 872 206
- EP-A- 0 945 251
- WO-A-98/26040
- WO-A-98/42819
- WO-A-99/18182
- WO-A-99/60089
- US-A- 5 525 397

## Description

The present invention relates to a disposable cleansing sheet which is removably fitted to a mop-like cleaning tool. More particularly it relates to a floor cleaning sheet for both domestic and business uses for cleaning and maintaining floors, i.e., removing dust, hair, solid foreign matter, stain, etc. from a floor and giving protection or a polish to a floor.

In the field of dry cleaning of floors to remove dust, lint, etc., a tufted mop having its fiber treated with an oil agent and a mop-like cleaning tool having a disposable sheet are known as handy cleaning tools for cleaning a wide area of a floor. With these types of cleaning tools, however, stains of a floor cannot be removed, and dust is not removed sufficiently.

Cleansing a floor to remove stains, dust, etc. has traditionally been done with a soaked and squeezed duster in a crouch. Giving protection or a polish to floors has also be done in a crouch with a duster or towel impregnate with a wax similarly to the floor cleaning. A cleaning sheet which is impregnated with a detergent and held in a hand to give a wipe is also known as disclose, e.g., in Japanese Utility Model 2516320. When the cleaning sheet of this type is attached to a mop-like cleaning tool, however, it is difficult to obtain both floor cleaning performance for stains and manageability of the cleaning tool with a hand.

WO99/508256 (unexamined published international patent application) discloses a cleaning sheet which is impregnated with a detergent and used in a hand to give a wipe. This cleaning sheet has long, fibers which can project over the sheet surface as a result of wiping. However, when the cleaning sheet is attached to a mop-like cleaning tool and used for cleaning, the long fibers are sometimes caught on projections, etc. of a floor to break the sheet. The above publication says that it is preferred for the sheet to be made of hydrophobic fibers where it is to be impregnated with an aqueous detergent. In such case, when the sheet is attached to a mop-like cleaning tool, the detergent is released too much in the beginning of wiping, failing to sustain the ability to clean a wide area. Besides, the ability to remove stains or dust is not sufficient.

Therefore, it is a generally followed method to carry out cleaning with a disposable product of sheet type while supplying a detergent, water, etc. to the sheet or the floor to be cleaned, as described in Japanese Patent Laid-Open Nos. 262883/98 and 286206/98 and Japanese Patent 2915840. Such a cleaning manner, however, is very troublesome because a user should have a detergent container in her/his hand in addition to the mop-like cleaning tool, or because the sheet should be detached from the cleaning tool in the course of cleaning to re-wet it. Further, if the squeeze after wetting is weak, too much water would be released in the initial stage of cleaning, which could rather spread the dirt. Where the handle of the tool has as low strength as that of the dry cleaning mop, the manageability of the mop may be reduced. Such cleaning can cause damages such as cracks to some kinds of wooden flooring. Furthermore, the sheet according to the above publications has a spun lace nonwoven fabric on its surface, which has insufficient capability of catching hair or lint in a wet state.

Japanese Patent Laid-Open Nos. 192285/93, 17361/94, and 17356/94 disclose a detergent impregnation type cleaning sheet having excellent capability of catching hair and lint, which comprises a net sheet having on one or both sides thereof a fiber web in a unitary body and which has an uneven configuration. Japanese Patent Laid-Open Nos. 14858/94 and 14859/94 disclose a detergent impregnation type cleaning sheet having excellent capability of catching hair and lint, which comprises a heat-shrunken base sheet and a fiber web in a unitary body and has an uneven configuration. The sheets disclosed in these publications need heat shrink to make the uneven configuration, which reduces productivity and increases production cost.

Japanese Patent Laid-Open No. 287899/98 discloses a cleaning sheet impregnated with a detergent containing spherical particles having an average particle size of 0.01 to 15 µm and having a viscosity of 2 to 500 mPa·s. This sheet is excellent in rubbing out dirt from the surface to be cleaned and lifting the dirt from the surface. Another wipe with a dry sheet, etc. is required, however, to wipe up the lifted dirt together with the spherical particles.

Japanese Patent 2765690 discloses a dry cleaning sheet comprising a net sheet and a nonwoven fiber aggregate formed by fiber entanglement, the net sheet and the fiber aggregate being united into one body by entanglement. It also discloses the relationship between the degree of fiber entanglement and the cleaning performance. However, this sheet is of dry type, and is not optimized for a sheet of wet type in which an aqueous detergent is impregnated.

In one preferred embodiment of WO98/26040 A (see page 22, lines 11 to 15) a known floor cleaning sheet which could be considered as representing the closest prior art is described. Said floor cleaning sheet impregnated with an aqueous detergent to be attached to a cleaning part of a cleaning tool having a handle of stick form connected to the cleaning part is disclosed, said sheet comprising a network sheet and a nonwoven fibre aggregate formed by the entanglement of fibres of a fibre web, disposed on at least one side of the network sheet, wherein the fibres of the nonwoven fibre aggregate are further entangled with the network sheet to form a unitary body.

It is further known from WO 99/18182 A a detergent impregnated floor cleaning sheet comprising a scrim that can be incorporated as a part of a scrubbing layer containing cellulose fibres.

### Disclosure of the Invention:

Accordingly, an object of the present invention is to provide a wet type floor cleaning sheet to be attached to a mop-like cleaning tool, with which stain or dust can be cleared of a floor without requiring another wipe, which is inexpensive, and which is capable of catching up hair and lint.

Another object of the present invention is to provide a floor cleaning sheet which can be used for cleaning a wide area and, when attached to a mop-like cleaning tool, can be operated handily with a single hand.

Still another object of the present invention is to provide a floor cleaning sheet which serves for giving a floor protection, a polish, and disinfection.

As a result of the extensive study for obtaining a cleaning sheet satisfactorily optimized for wet type, the inventors of the present invention have found that it is advantageous to make the degree of fiber entanglement relatively lower than that of a cleaning sheet of dry type, and have also found that the detergent-impregnated wet sheet having such lower degree of fiber entanglement is capable of catching up fibrous dusts such as hair and lint and is prevented from falling-off of the constituent fibers and has good mangeability.

The above objects are achieved with a floor cleaning sheet according to the independent claim 1.

Preferred embodiments are defined in the dependent claims.

### Brief Description of the Drawings:

Fig:1 is a schematic perspective showing an embodiment of the floor cleaning sheet of the present invention.
Fig. 2 schematically illustrates a method of measuring a static friction resistance.
Fig. 3 schematically illustrates a method of measuring an amount of a detergent released.
Fig. 4 is a perspective showing the floor cleaning sheet of the invention as attached to a cleaning tool.
Fig. 5 schematically shows a method of measuring a load required at the start of wiping.
Fig. 6 schematically depicts a method of measuring a friction resistance in cleaning floorboard with the floor cleaning sheet of the invention.

### Best Mode for Carrying out the Invention:

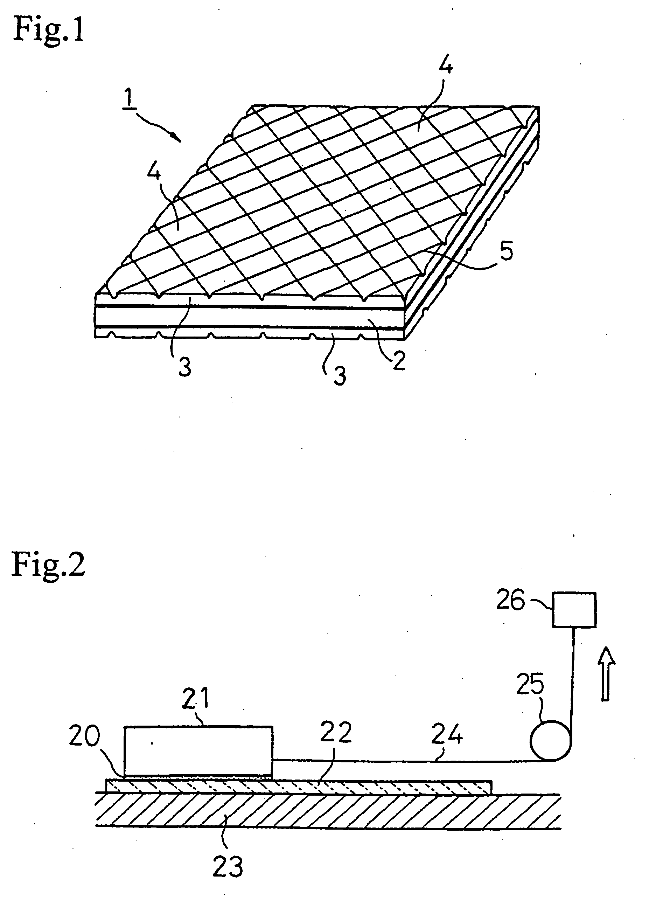

The present invention will be described with reference to its preferred embodiments in the practice by referring to the accompanying drawings. Fig. 1 is a schematic perspective of one embodiment of the floor cleaning sheet (hereinafter simply referred to as a cleaning sheet) according to the present invention

The cleaning sheet 1 according to this embodiment is a wet sheet impregnated with an aqueous detergent, the sheet having a unitary multilayered structure comprising an inner layer 2 and a pair of outer layers 3 and 3, between which the inner layer 2 is sandwiched.

In order to catch up hair or lint on a floor, the surface layer of the cleaning sheet 1 which is brought into contact with a floor when used, i.e., the outer layer 3 in this embodiment, is made of nonwoven fabric formed by fiber entanglement of a fiber web, and it is preferred for the individual fibers constituting the surface layer to have a high degree of freedom, that is, it is preferred for the fibers of the surface layer to have a low degree of entanglement. The inventors of the present invention have unexpectedly found that the cleaning sheet of the present invention has the best condition of fiber entanglement lying in relatively lower range than a cleansing sheet of dry type which consists of the fiber entanglement of the constituent fibers. The inventors have also found that the falling-off of the constituent fibers can be prevented by lowering the degree of fiber entanglement than that of a cleaning sheet of dry type. While the outer layer 3 corresponds to the surface layer in this embodiment, the term "surface layer" denotes the surface and its vicinity of a sheet where the detergent-impregnated sheet has a single layer structure.

The degree of fiber entanglement in the surface layer (outer layer 3) of the cleaning sheet 1 according to the present embodiment can be represented by a static friction resistance. The static friction resistance can be measured by the method illustrated in Fig. 2. Sandpaper 20 (Techno sander, 1200-grit; water-resistant paper available from 3M) is stuck to a weight 21 having a 10 cm by 10 cm base (the total weight inclusive of the sandpaper: 400 g). The weight 21 is placed on an aqueous detergent-impregnated cleaning sheet 22 (200 mm x 280 mm) which is firmly fixed on a horizontal mount 23, with the abrasive surface of the sandpaper in contact with the cleaning sheet. A thread 24 is attached to a side of the weight, and the other end of the thread 24 is attached to a load cell 26 of a tensile tester (RTM-25, supplied by ORIENTEC Co.) through a pulley 25. The tensile tester is operated to move the weight 21 in a horizontal direction by 30 mm at a speed of 500 mm/min, and the maximum static friction resistance in the initial movement is measured, which is taken as an indication of the degree of fiber entanglement of the surface layer. The measurement is made in both the machine direction (MD, i.e., the sheet running direction in the production of the cleaning sheet) and the cross direction (CD) of the sheet. The sandpaper is exchanged with new one for every measurement.

Where the fibers of the surface layer in the aqueous detergent-impregnated cleaning sheet are in a less entangled state, i.e., where the individual fibers have a higher degree of freedom, they catch on the sandpaper to a higher degree, tending to show a higher static friction resistance.

The static friction resistance of the surface layer in the cleaning sheet 1, which is indicative of the degree of fiber entanglement, is 900 to 2500 cN. If it is less than 900 cN, sufficient ability to catch up hair or lint is hard to secure. If it exceeds 2500 cN, the sheet has so low surface strength that the fibers catch on fine projections, etc. of a floor, making the mop less manageable. In addition, the fibers constituting the sheet tend to fall-off during cleaning operation. In order to secure both capability of catching hair and lint and the surface strength of the cleaning sheet, i.e., the manageability of the mop, the static friction resistance is preferably 1 100 to 2200 cN, particularly 1200 to 2000 cN. While it is the most desirable that the static friction resistance be in that range in both the MD and CD of the cleaning sheet 1, the static friction resistance in either one of the directions falling within that range is sufficient.

The outer layer 3 which constitutes the multilayered sheet serves as the surface layer of the cleaning sheet 1 according to the present embodiment and as a site that is brought into contact with a floor in using the cleaning sheet 1. For the cleaning sheet 1 to have sufficient surface strength, the outer layer 3 is preferably made of nonwoven fabric comprising fibers having a length of 20 mm or longer, particularly 30 to 100 mm, especially 35 to 65 mm. Not all the fibers making "the nonwoven fabric comprising 20 mm or longer fibers" do not need to have a fiber length of 20 mm or more. It is acceptable for the nonwoven fabric to comprise fibers shorter than 20 mm that may be present in the raw material of the nonwoven fabric and/or unavoidably incorporated and/or generated during production of the nonwoven fabric.

It is preferred for the cleaning sheet I to release 0.004 to 0.04 g/100 cm² of the aqueous detergent under a load of 400 g/100 cm² for obtaining improved stain removing performance and improved manageability in cleaning with a mop-like cleaning tool to which the cleaning sheet 1 is attached. The amount of the aqueous detergent to be released will hereinafter referred to as an amount of detergent release. For further improving the stain removing performance and the mop manageability, a still preferred amount of detergent release is 0.005 to 0.03 g/100 cm², particularly 0.006 to 0.02 g/100 cm².

The cleaning sheet 1 can be made to have the amount of detergent release fall within the above range by, for example, controlling the factors hereinafter described, such as the area ratio of the projections of the cleaning sheet 1, the difference in level between the projections and the depressions, the amount of the impregnated aqueous detergent, and the hydrophilicity, bulkiness, etc. of the sheet to be impregnated with the aqueous detergent (the multilayered sheet in this particular embodiment).

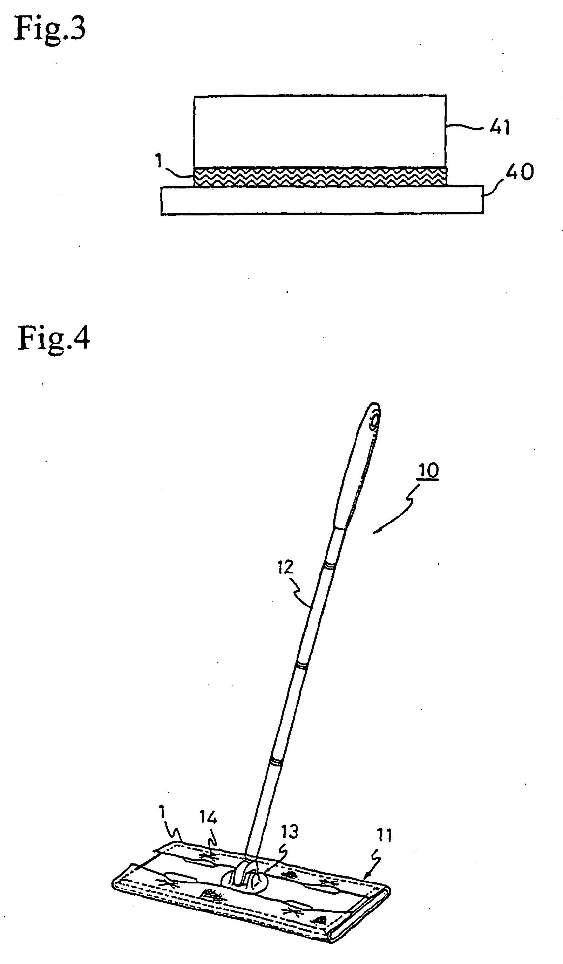

The amount of detergent release is measured by the method depicted in Fig. 3. A cleaning sheet impregnated with a prescribed amount of an aqueous detergent is cut into a size of 100 x 100 mm without being compressed, and the cut piece 1 is placed on a 110 x 110 mm acrylic plate 40. A weight 41 weighing 400 g whose base measures 100 x 100 mm is put on the cleaning sheet 1 and left to stand for 1 minute. The weight 41 and the cleaning sheet 1 are removed, and the amount of the detergent released on the acrylic plate 40 is measured quickly on a balance.

As shown in Fig. 1, the multilayered sheet has been heat-embossed in a rhombus pattern to have on its surface a large number of projections 4, 4, ... and linear depressions 5 bordering the projections 4 Such a surface configuration reduces the frictional resistance of the cleaning sheet 1 against a floor in floor cleaning and makes it easy to control the amount of the aqueous detergent to be released within the above-described range. The depressed parts 5 are made denser than the projected parts 4 by heat and pressure application in heat embossing. For securing both the capability of catching hair and lint and the mop manageability, the projections 4 preferably range in area from 30 to 95%, particularly 40 to 85%, especially 50 to 80%, based on the apparent area of the cleaning surface of the cleaning sheet 1. The language "apparent area of the cleaning surface of the cleaning sheet 1" as used here means the area of the cleaning surface of the cleaning sheet 1 seen in its plan view.

The method of forming the unevenness on the multilayered sheet is not limited to the above-described heat embossing, and other methods can be adopted. Useful other methods include a method comprising integrally laminating a heat crimping fiber web or a heat shrinkable fiber web with a non-heat-crimping fiber web or a non-heat-shrinkable fiber web and subjecting the multilayered sheet to heat treatment to develop unevenness, a method comprising bonding a heat shrinking film and a fiber web at predetermined positions and heat treating the combination to develop unevenness, a method comprising joining a heat shrinking net and a fiber web into a unitary body by, e.g., a water jet process, and then heat treating the combination to develop unevenness, a method in which the pattern of a carrier wire is transferred to a web to give unevenness to the web in the production of spun lace nonwoven fabric, and a method comprising placing a fiber web on a patterning net and sucking the web to transfer the pattern to the web to make the web uneven.

The area of the projections 4 is measured as follows. A cleaning sheet (10 cm x 10 cm) impregnated with a prescribed amount of an aqueous detergent is spread out on paper for penmanship practice which turns black on being wetted with water (KN37-10, available from Gochikuseishodo K.K.). A 25 g acrylic plate of 10 cm by 10 cm is put on the cleaning sheet, and a 2000 g weight is put on the acrylic plate. After 60 seconds, the weight and the acrylic plate are removed quickly. The area of the paper having turned to black is measured by use of an image analyzer (New Qube, available from Nexus Co., Ltd.), which is regarded as the area of the projections 4. The area of the projections 4 is divided by 100 cm² (the apparent area of the cleaning surface of the cleaning sheet), and the quotient is taken as an area ratio of the projections 4.

Although the pattern of the depressions 5 made by embossing is not particularly limited to the one shown in Fig. 1, it is preferred that the depressed pattern comprises at least in parts thereof continuous straight and/or curved lines. It is particularly preferred for maintaining the surface strength of the cleaning sheet 1 that continuous linear depressions 5 cross each other to encircle the individual projections 4. Where the depressions 5 are linear or curved, the line width is preferably 0.5 to 3 mm. The distance between depressions 5 is appropriately adjusted according to the characteristics required of the cleaning sheet 1. An emboss pattern made of a combination of the above described linear pattern and a discontinuous dot pattern is also suitable.

The difference in level between the projections 4 and the depressions 5 on the cleaning sheet 1 is preferably controlled so that the amount of detergent release may fall within the above range. Specifically, the difference in level is preferably 0.02 to 1 mm, particularly 0.04 to 0.7 mm. The difference of level is measured by observing a section of the cleaning sheet 1 under a microscope, etc.

The outer layer 3 of the multilayered sheet is made of nonwoven fabric as stated above. From the standpoint of the sheet texture and the capability of catching hair and lint, the nonwoven fabric is preferably spun lace nonwoven fabric, which can have a low degree of entanglement.

It is preferred for the fiber constituting the outer layer 3 to comprise a hydrophilic cellulose fiber and a low-melting thermoplastic fiber to maintain the cleaning performance, the manageability, and the sheet strength.

Because hydrophilic cellulose fiber exhibits excellent performance in re-absorbing dirty liquid having dissolved or dispersed stain and dust, it is preferably present in a proportion of 30 to 98% by weight, particularly 50 to 90% by weight, based on the weight of the outer layer 3 so as to remove stain and dust efficiently. The hydrophilic cellulose fiber includes rayon and cotton fiber.

The low-melting thermoplastic fiber is preferably present in a proportion of 2 to 70% by weight, particularly 10 to 50% by weight, based on the weight of the outer layer 3 so as to improve the sheet strength after heat embossing and the manageability.

The low-melting thermoplastic fiber preferably has a melting point of 200°C or lower, particularly 170°C or lower. Such fibers include polyethylene fiber, polypropylene fiber, low-melting type polyethylene terephthalate fiber, polyvinyl alcohol fiber, core/sheath conjugate fiber having the low-melting fiber as a sheath and a high-melting fiber as a core, and side-by-side conjugate fiber having the low-melting fiber and a high-melting fiber.

For improving the cleaning performance, the manageability, and the sheet texture, the outer layer 3 can further contain other synthetic fiber in addition to the above-mentioned hydrophilic cellulose fiber and low-melting thermoplastic fiber. Useful other synthetic fibers include polyester fiber, polyacrylonitrile fiber, nylon fiber, acetate fiber, polyvinyl alcohol fiber, and polyvinyl chloride fiber.

The diameter of the fiber constituting the outer layer 3 is preferably, but not limited to, 3.3 dtex or smaller. Fibers of 0.5 to 2.0 dtex are still preferred for hair and lint catching performance. The fibers may be either long fiber filaments or short fiber staple fibers.

The outer layer 3 preferably has a basis weight of 8 to 70 g/m², particularly 15 to 30 g/m², in relation to the basis weight of the multilayered sheet. The thickness of each outer layer 3 is preferably 0.05 to 5 mm. For the hair and lint catching performance in view of cost, the thickness is still preferably 0.1 to 2 mm, particularly preferably 0.2 to I mm.

The inner layer 2, which constitutes the multilayered sheet, can be made of various sheeting materials, such as paper, nonwoven fabric, woven fabric, and resin nets. For securing the strength of the cleaning sheet these sheeting materials preferably have high strength, for example, a breaking strength of 200 cN/25 mm or higher. With a basis weight of the multilayered sheet being 100 g/m² or less, it is preferred that the inner layer 2 be low in density and bulky so as to retain an aqueous detergent and to develop the multilayered sheet strength, thickness feel and cushioning properties. Preferred materials for making up the inner layer with such characteristics include thermally bonded (air-through) nonwoven fabric, spun lace nonwoven fabric, and air-laid nonwoven fabric. The breaking strength of the material is preferably as high as possible, but the practical upper limit would be about 100 N/25 mm.

Where the inner layer 2 is made of fiber, hydrophilic fibers such as rayon, cotton, pulp, and polyvinyl alcohol fiber, can be used. It is also preferred to use hydrophobic fiber as a main constituent to form the inner layer 2 with an increased thickness and improved cushioning properties. Examples of the hydrophobic fiber are polyolefin fiber, such as polyethylene or polypropylene, polyester fiber, polyamide fiber, such as nylon, polyacrylonitrile fiber, and conjugate fiber of these fibers such as core/sheath fiber and side-by-side fiber. It is preferred for these fibers to have three-dimensional crimp to increase the thickness of the inner layer 2 and improve the cushioning properties. Where the multilayered sheet is subjected to a heat treatment to form surface unevenness, heat-shrinkable fiber or heat-crimping fiber is used.

Where the inner layer 2 is made of fiber, the diameter of the fiber is preferably, but not limited to, 1 to 7 dtex for increasing the thickness and cushioning properties. The length of the fiber is not limited either, and either long fiber filaments or short fiber staple fibers can be used.

The inner layer 2 preferably has a basis weight of 20 to 150 g/m², particularly 25 to 80 g/m², in relation to the basis weight of the multilayered sheet. It preferably has a thickness of 0.2 to 4.8 mm. A still preferred thickness is 0.4 to 3 mm, particularly 0.6 to 2 mm, for securing thickness feel and cushioning properties while bringing the cost within a level that may not encounter consumer resistance against throwing away after use.

The multilayered sheet composed of the aforementioned inner layer 2 and outer layers 3 is produced by, for example, the following method, a fiber web formed by carding, etc. is superposed on each side of thermally bonded nonwoven fabric, which becomes the inner layer 2. The three layers are needled with a high pressure water jet (water needing), whereby fibers of the fiber web are entangled among themselves to form spun lace nonwoven fabric as the outer layer 3 and, at the same time, the fiber webs are entangled and united with the thermally bonded nonwoven fabric as the inner layer 2 to provide a composite spun lace nonwoven fabric of low entanglement. The nonwoven fabric thus obtained has a unitary structure comprising the thermally bonded nonwoven fabric as a sheeting material having, on both sides thereof, a nonwoven fiber aggregate (spun lace nonwoven fabric) formed by fiber entanglement of the fiber web, in which the fibers of the fiber webs are entangled not only among themselves but with the sheeting material to form a unitary body. The resulting nonwoven fabric is then subjected to heat embossing to form a multilayered sheet.

In the above method, the degree of fiber entanglement in the multilayered sheet depends of the amount of energy given to the fiber web by water needling. The amount of energy is governed by various factors including the line speed of manufacture, weight or basis weight of the fiber web, configuration of the water jet nozzle such as diameter of nozzle hole, number of nozzle holes and shape of nozzle hole, water pressure, number of nozzles, and quality of water. In order to optimize the degree of fiber entanglement, the amount of energy preferably ranges from 200 to 1800 kJ/kg. If it is less than 200 kJ/kg, the degree of fiber entanglement may become lower, resulting in unfavorable low strength of the cleaning sheet. In addition, manufacture of the sheet may become difficult. If it exceeds 1800 kJ/kg, the degree of fiber entanglement may become higher and the catching of hair and lint may become poor. In order to satisfy better processability of the sheet, acceptable strength of the sheet during use, and better cleaning performance including catching hair and lint, the amount of energy is more preferably 400 to 1500 kJ/kg, still preferably 500 to 1200 kJ/kg. In this case, the amount of energy is the value in which the outer layers 3, 3 are formed on each side of the inner layer 2. Thus, the half energy is required if the single outer layer 3 is formed on one side of the inner layer 2. The term "kJ" denotes kilojoule and "kg" denotes the weight of the fiber web. In other words, the amount of energy means the energy expressed in joule given to 1 kg of the fiber web.

The multilayered sheet, namely, the cleaning sheet I before being impregnated with an aqueous detergent, suitably has a basis weight of 40 to 200 g/m². With a basis weight less than 40 g/m², it is difficult to impregnate the multilayered sheet with a sufficient amount of a detergent for wiping a wide floor. A basis weight exceeding 200 g/m² tends to make the mop less manageable due to the increased weight and leads to an increase of cost. A preferred basis weight of the multilayered sheet is 50 to 150 g/m², particularly 55 to 100 g/m². The dry thickness of the multilayered sheet is preferably 0.2 to 10 mm under a load of 3 g/m² for securing detergent retentivity, manageability of the cleaning sheet 1, and sheet strength. With additional considerations for the cleaning sheet's conformity to the unevenness of a floor and the cost, a still preferred thickness is 0.4 to mm, particularly 0.6 to 2 mm.

The multilayered sheet has a breaking strength of 200 cN/25 mm or higher, particularly 300 to 8000 cN/25 mm, which is preferred for preventing fiber fall-off from the surface layer, securing sufficient strength for cleaning operation, and obtaining hair and lint catching performance. It is sufficient only if the multilayered sheet has the above-described breaking strength in either one of the machine direction (MD) and the cross direction (CD).

The multilayered sheet is impregnated with an aqueous detergent to provide the cleaning sheet 1 according to the present embodiment. The characteristics as a wet sheet are thus manifested. It is preferred to use an aqueous detergent having a viscosity of 20 to 30000 mPa·s at 25°C. Use of an aqueous detergent having a viscosity in this range brings about the following advantages. (1) The amount of the aqueous detergent released over a floor in the initial stage of cleaning is controlled, and the detergent is released at a uniform rate from the beginning to the end of cleaning. Therefore, (2) the sustainability of cleaning performance in wide area cleaning is improved. (3) Since the release of the aqueous detergent is suppressed even in the initial stage of cleaning, the friction resistance of the cleaning sheet against the surface to be cleaned is reduced. (4) Since the release of the aqueous detergent is under control even in the initial stage of cleaning, the fibers on the cleaning sheet surface keep freedom to catch up and hold hair and lint. In detail, if the viscosity of the aqueous detergent is less than 20 mPa·s, it tends to be difficult to control the amount of the aqueous detergent released in the initial stage of cleaning. An aqueous detergent whose viscosity exceeds 30000 mPa·s tends to have difficulty in impregnating the multilayered sheet. For further ensuring the control of the amount of aqueous detergent release in the initial stage of cleaning and further improving the ease in the step of impregnating the multilayered sheet with the aqueous detergent, the viscosity is still preferably 100 to 1000 mPa·s, particularly 300 to 800 mPa·s.

The viscosity of the aqueous detergent is measured with a Brookfield viscometer. The rotor to be used and the number of rotations are altered appropriately according to the viscosity of the aqueous detergent.

It is preferred that the aqueous detergent contains substantially no water-insoluble solid particles. If water-insoluble solid particles are present in the aqueous detergent, the solid particles may remain on the cleaned surface and need another wipe. However, presence of a trace amount, e.g., up to about 0.1% by weight, of solid particles as impurity is allowable.

The aqueous detergent preferably comprises water as a medium, a surface active agent, an alkali agent, a thickener, and a water-soluble solvent. It is desirable that all the components making up the aqueous detergent be water soluble. From the standpoint of a finish after cleaning, the residual nonvolatile content in the aqueous detergent is preferably 10% by weight or less, still preferably 5% by weight or less, particularly preferably 1% by weight or less.

The surface active agent which can be used include anionic surface active agents, nonionic surface active agents, cationic surface active agents, and amphoteric surface active agents. Preferred for securing both detergency and finish are nonionic surface active agents, such as polyoxyalkylene (alkylene oxide addition molar number: 1 to 20) alkyl (straight or branched; carbon atom number: 8 to 22) ethers, alkyl (straight or branched; carbon atom number: 8 to 22) glycosides (average degree of sugar condensation: I to 5), sorbitan fatty acid (straight or branched; carbon atom number: 8 to 22) esters, and alkyl (straight or branched; carbon atom number: 6 to 22) glycerol ethers; and amphoteric surface active agents, such as alkylcarboxybetaines, alkylsulfobetaines, alkylhydroxysulfobetaines, alkylamidocarboxybetaines, alkylamidosulfobetaines, and alkylamidohydroxysulfobetaines, the alkyl moiety of these betaines having 8 to 24 carbon atoms. From the standpoint of detergency and finish of the cleaned surface, the surface active agent content in the aqueous detergent is preferably 0.01 to 1.0% by weight, particularly 0.05 to 0.5% by weight.

The alkali agents include hydroxides such as sodium hydroxide; carbonates such as sodium carbonate; alkaline sulfates such as sodium hydrogensulfate; phosphates such as sodium primary phosphate; organic alkali metal salts such as sodium acetate and sodium succinate; ammonia; alkanolamines such as mono-, di- or triethanolamine; β-aminoalkanols such as 2-amino-2-methyl-1-propanol; and morpholine. From the viewpoint of touch and pH buffering properties, alkanolamines such as mono-, di- or triethanolamine, β-aminoalkanols such as 2-amino-2-methyl-1-propanol, and morpholine are preferred. From the viewpoint of detergency and touch, the alkali content in the aqueous detergent is preferably 0.01 to 1% by weight, particularly 0.05 to 0.5% by weight.

The thickeners include water-soluble polymers, such as naturally occurring polysaccharides, semisynthetic polymers such as cellulosic polymers and starch-based polymers, synthetic polymers such as vinyl polymers and polyethylene oxide, and water-soluble polymers such as clay minerals. In particular, polyacrylic acid type thickeners, acrylic acid-alkyl methacrylate copolymer type thickeners and mixtures thereof are preferred for their less stickiness and less sliminess. These acrylic acid thickeners are preferably used in the form of their sodium salt to develop viscosity. From the standpoint of finish of the cleaned surface, the thickener content in the aqueous detergent is preferably 0.01 to 2% by weight, particularly 0.02 to 1% by weight.

One or more water-soluble solvents selected from monohydric alcohols, polyhydric alcohols, and their derivatives are suitable. From the standpoint of finish, those having a vapor pressure of 267 Pa (2 mmHg) or higher are preferred. For example, ethanol, isopropyl alcohol, propanol, ethylene glycol monomethyl ether, and propylene glycol monomethyl ether are preferred. The water-soluble solvent content in the aqueous detergent is preferably 1 to 50% by weight, particularly 1 to 20% by weight, in view of odor and low irritation to the skin.

In addition to the above-described components the aqueous detergent can contain disinfectants, which endow the aqueous detergent with a disinfecting effect in addition to a detergent action. Useful disinfectants include hydrogen peroxide, hypochlorous acid, sodium hypochlorite, quaternary ammonium salts, sodium benzoate, sodium p-hydroxybenzoate, and natural disinfectants such as polylysine. In particular, quaternary ammonium salts and polylysine, a natural disinfectant, are preferably used for their stability in compounding and disinfecting performance. The disinfectant content in the aqueous detergent is preferably 0.005 to 2% by weight, particularly 0.01 to 1% by weight from the viewpoint of the balance between the disinfecting effect and low irritation to the skin.

According to necessity, the aqueous detergent can further contain perfumes, antifungal agents, colorants (dyes and pigments), chelating agents, waxes, and so forth.

The content of water, the medium of the aqueous detergent, preferably ranges from 50 to 99.9% by weight, particularly 80 to 99% by weight, to give a good finish to the cleaned surface.

The amount of the impregnated aqueous detergent is preferably 100 to 1000% by weight based on the weight of the multilayered sheet (i.e., the weight of the cleaning sheet 1 in its non-impregnated (dry) state). An amount less than 100% by weight tends to fail to exhibit sufficient cleaning performance for stain or dust. An amount more than 1000% by weight can result in excessive supply of the detergent to a floor, which may allow stain or dust to remain on the floor and adversely affect some kinds of wooden flooring. For further improving the cleaning performance, a still preferred amount of the impregnated aqueous detergent is 100 to 500% by weight, particularly 150 to 350% by weight, especially 200 to 300% by weight. The amount of the impregnated aqueous detergent is measured by weighing the aqueous detergent-impregnated multilayered sheet, either as it is or after being mangled to remove excess of the aqueous detergent, under no load applied and calculating based on the weight of the multilayered sheet.

As shown in Fig. 4, the cleaning sheet 1 of the present embodiment is used for floor cleaning as attached to a cleaning part I 1 of a cleaning tool 10 having a handle 12 of stick form connected to the cleaning part 11. In more detail, the cleaning tool 10 is composed of a flat cleaning part 1 1 to which the cleaning sheet 1 is attachable and a handle 12 of stick form which is rotatively connected to the cleaning part 11 through a universal joint 13. The cleaning sheet 1 is fixed by means of a plurality of flexible members 14 provided on the cleaning part 11. The flexible members 14 each have radial slits.

The present invention is not limited to the aforementioned embodiment. For example, while the cleaning sheet 1 in the above embodiment is a three-ply multilayered sheet impregnated with an aqueous detergent, the multilayered sheet may be replaced with a single-ply, two-ply or four- or more-ply structure. For example, in the above-described embodiment, the inner layer 2 may be laminated with the outer layer 3 on only one side thereof.

The shape of the projections on the surface of the cleaning sheet 1 in the above-described embodiment can be changed variously, taking into consideration the ease of sheet production, manageability of the cleaning sheet 1, and the like.

### Examples:

The present invention will further be illustrated in greater detail with reference to Examples, but the invention is by no means limited thereto. Before entering into Examples and Comparative Examples, methods for carrying out evaluation tests are explained.

### 1) Static friction resistance, indicative of the fiber freedom in the cleaning sheet surface layer

Measurement was made in accordance with the method previously described. The 400 g load is practically equivalent to the average load imposed to the cleaning sheet attached to Quickle Wiper, a cleaning tool supplied by Kao Corp., while used for floor cleaning.

### 2) Area ratio of Projections

Measured in accordance with the method previously described.

### 3) Hair catching ratio

The cleaning sheet was attached to Quickie Wiper (Kao Corp.). Five human hairs of about 10 cm in length were scattered over floorboards (Woodytile MT613T, supplied by Matsushita Electric Works, Ltd.) within an area of 30 cm x 60 cm. The hairs were wiped up by two double strokes (60 cm stroke) with the cleaning sheet, and the number of hairs caught on the cleaning sheet was counted. The same test was successively carried out 6 times to measure the total number of hairs caught out of 30, which was divided by 30, and the quotient was multiplied by 100 to give the hair catching ratio (%).

### 4) Dust collecting performance

The cleaning sheet was attached to Quickle Wiper (Kao Corp.). Seven kinds of dust for JIS testing (fine particles of the Kanto loam) each weighing 0,1 g were each uniformly spread on floorboards (Woodytile MT613T, Matsushita Electric Works, Ltd.) within an area of 100 cm x 100 cm by using a brush. The floorboards were cleaned by giving four parallel double strokes of the cleaning sheet. The same test was successively conducted 6 times. The dirty cleaning sheet was dried and weighed to obtain the total weight of the sheet, the nonvolatile content of the detergent, and the collected dust. The amount of the collected dust was calculated by subtracting the sheet weight measured before impregnation and the theoretical residual nonvolatile content from that total weight. The weight of the collected dust was divided by the total weight of the spread dust (0.1 g x 6=0.6 g), and the quotient was multiplied by 100 to give the dust collecting ratio (%).

### 5) Performance in removing dry soy sauce stains

Five drops (0.02 g x 5 drops) of commercially available soy sauce were dropped on floorboards of 100 x 100 cm and dried with a drier. The cleaning sheet was attached to Quickle Wiper (Kao Corp.) and wiped over the dry stains of soy sauce. The cleaning performance was evaluated based on the following criteria.
A: The stains were completely wiped off by 10 double strokes.
A-B: The stains were completely wiped off by 15 double strokes.
B: The stains were completely wiped off by 20 double strokes.
B-C: The stains were completely wiped off by 30 double strokes.
C: The stains were not completely wiped off by more than 30 double strokes.

### 6) Manageability of wiper

The cleaning sheet was attached to Quickie Wiper (Kao Corp.). Floorboards (Woodytile E type KER501, supplied by Matsushita Electric Works, Ltd.) were wiped with the Quickie Wiper handled with one hand. The manageability of the wiper at the start of wiping was evaluated according to the following criteria.
A: The wiper is easily slid by one hand, and the head of the cleaning part of the wiper does not lift when a forward slide is turned to a backward slide.
A-B: The wiper is easily slid by one hand, but the head of the cleaning part sometimes lifts slightly at the backward turning.
B-C: The wiper is easily slid by one hand, but the head of the cleaning part lifts at the backward turning.
C: Great force is needed to start forward wiping, and the head of the cleaning part sometimes upsets at the backward turning.

### 7) Resistance to fiber fall-off

A mechanical abrasion test was carried out on the surface of the cleaning sheet. The resistance to fiber fall-off was evaluated from the amount of fallen fibers according to the following criteria.
A: Scarcely fibers fall off, raising no problem.
B: Fibers fall off slightly.
C: Fibers fall off considerably.

### 8) Gradual releasability of detergent

Floorboards of 6 *tatami* in area (one "*tatami*" is 90 cm wide and 180 cm long; 6 *tatami* corresponds to an area of 270 cm x 360 cm) were continuously wiped with Quickle Wiper (Kao Corp.) having the cleaning sheet attached thereto, and the amount of the detergent released for every *tatami* was measured. The cleaning sheet was detached from the head of the cleaning part and weighed for every cleaning operation over an area of one *tatami* to measure the amount of the detergent released per *tatami*. The cleaning operation per *tatami* was completed by giving 2 parallel double strokes (one stroke: about 90 cm) along the longitudinal direction (180 cm long) and 4 parallel double strokes along the width direction (90 cm long).

### 9) Performance in removing dry soy sauce stain after cleaning 5 tatami area

One drop (0.02 g) of commercially available soy sauce was dropped on floorboards (area: one *tatami*) and dried with a drier. The floorboards (one *tatami*) stained with dry soy source were cleaned with Quickle Wiper having the cleaning sheet attached thereto that had been wiped over clean 5-*tatami* floorboards, and the cleaning performance was evaluated according to the following criteria. The manner of wiping 5-*tatami* floorboards was the same as in the above-described measurement of detergent gradual releasability, while the soy sauce-stained floorboards were wiped by giving wipes only to the stained area, and the relationship between the number of strokes given and the degree of stain removal was evaluated.
A: The stain was completely removed by 10 or less double strokes.
A-B: The stain was completely removed by 15 double strokes.
B: The stain was completely removed by 20 double strokes.
B-C: The stain was completely removed by 30 double strokes.
C: The stain was not completely removed by more than 30 strokes.

### 10) Finish

Clean floorboards of 100 x 100 cm were wiped with Quickle Wiper (Kao Corp.) having the cleaning sheet attached thereto. After drying, the finish of the floorboards was observed with the naked eye under the light of a fluorescent lamp and evaluated on the following 3-scale.
A: No traces (streaks) of detergent components are observed.
B: A few traces (streaks) of detergent components are observed.
C: Traces (streaks) of detergent components are observed.

### 11) Load on wiper at the start of wiping

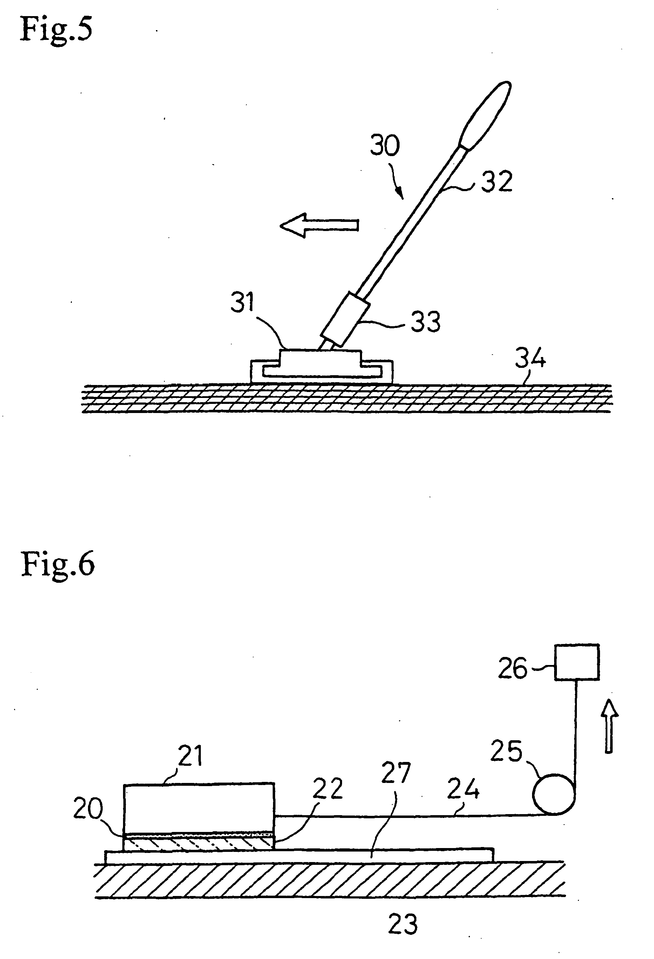

As shown in Fig. 5, floorboards 34 (Woodytile E type KER501, supplied by Matsushita Electric Works, Ltd.) were wiped with Quickle Wiper 30 having a load cell 33 fitted between the cleaning head 31 and the handle 32. The compression load at the start of wiping was measured.

### 12) Friction resistance

As shown in Fig. 6, a floorboard 27 (Woody Floor Sheet KER602, supplied by Matsushita Electric Works, Ltd.) was put on a horizontal mount 23, and a 10 cm x 10 cm cut piece 22 of the cleaning sheet was placed thereon. A weight 21 having sandpaper 20 (Technosander, 1200-grit; water-resistant paper available from 3M) stuck to its 10 cm x 10 cm base (the total weight inclusive of the sandpaper was 400 g) was put on the cleaning sheet with the sandpaper in contact with the cleaning sheet. A thread 24 was attached to a side of the weight, and the other end of the thread 24 was attached to a load cell 26 of a tensile tester (RTM-25, supplied by ORIENTEC Co.) through a pulley 25. The tensile tester was operated to move the weight 21 in a horizontal direction by 30 mm at a speed of. 500 mm/min, and the maximum static friction resistance in the initial movement was measured, which was taken as a friction resistance. The measurement was made in both the machine direction (MD), i.e., the sheet running direction in the production of the cleaning sheet and the cross direction (CD) of the sheet, and the average was obtained.

### EXAMPLE 1

Air-through nonwoven fabric having a basis weight of 27 g/m² was made of three-dimensionally crimped low-melting fiber having a core/sheath structure comprising polypropylene as a core and polyethylene as a sheath (2.8 dtex x 51 mm; melting point of the sheath component: 130°C). The fibers were thermally bonded among themselves at a temperature of 140°C. The resulting air-through nonwoven fabric had a breaking strength of 1660 cN/25 mm in the machine direction and 220 cN/25 mm in the cross direction.

Separately, rayon fiber (1.7 dtex x 40 mm), acrylic fiber (0.9 dtex x 51 mm) and core/sheath fiber having polypropylene as a core and polyethylene as a sheath (1.0 dtex x 38 mm) were mixed at a weight ratio of 50/25/25 and carded in a conventional carding machine to prepare a fiber web having a basis weight of 19 g/m². The fiber web was superposed on each side of the air-through nonwoven fabric. The three layers were subjected to water needling under a low energy condition to entangle the air-through nonwoven fabric and the fiber webs to prepare composite spun lace nonwoven fabric having a basis weight of 65 g/m² of which the surface layer had a high degree of fiber freedom. The resulting nonwoven fabric was passed through a supersonic embossing machine to give the whole surface of the nonwoven fabric an uneven diamond pattern.

The resulting nonwoven fabric was impregnated with an aqueous detergent (viscosity: 500 mPa·s/25°C) comprising water, ethanol, 2-amino-2-methyl-1-propanol, dodecyl glycoside (degree of condensation: 1.4), and a thickener (Carbopole ETD2020, available from Nikko Chemical K.K.) at a ratio of 93.73/6/0.1/0.1/0.07 (by weight) to prepare a floor cleaning sheet. The amount of the impregnated aqueous detergent was 250% based on the weight of the nonwoven fabric. "Carbopole ETD2020" is an acrylic acid-alkyl (C₁₀-C₃₀) methacrylate copolymer. The residual nonvolatile content of the aqueous detergent was 0.17%. The floor cleaning sheet had a projection area ratio of 76.0% based on the apparent area of the cleaning, sheet. The cleansing sheet had a breaking strength of 2850 cN/25 mm in the machine direction (MD) and of 360 cN/25 mm in the cross direction (CD).

### EXAMPLE 2

The composite spun lace nonwoven fabric obtained in Example 1 was again subjected to water needling treatment under a low energy condition to prepare composite spun lace nonwoven fabric whose degree of fiber freedom was slightly lower than that in Example 1. Thereafter, the nonwoven fabric was embossed and impregnated with an aqueous detergent in the same manner as in Example 1 to prepare a floor cleaning sheet.

### EXAMPLE 3

The composite spun lace nonwoven fabric obtained in Example 1 was again subjected to water needling treatment under an energy condition higher than that adopted in Example 2 to prepare composite spun lace nonwoven fabric whose degree of fiber freedom was slightly lower than that in Example 2. Thereafter, the nonwoven fabric was embossed and impregnated with an aqueous detergent in the same manner as in Example 1 to prepare a floor cleaning sheet.

### EXAMPLE 4

The composite spun lace nonwoven fabric obtained in Example 1 was again subjected to water needling treatment under an energy condition higher than that adopted in Example 3 to prepare composite spun lace nonwoven fabric whose degree of fiber freedom was slightly lower than that in Example 3. Thereafter, the nonwoven fabric was embossed and impregnated with an aqueous detergent in the same manner as in Example 1 to prepare a floor cleaning sheet.

### EXAMPLE 5

Rayon fiber (1.7 dtex x 40 mm) and core/sheath fiber having polypropylene as a core and polyethylene as a sheath (1.0 dtex x 51 mm) were mixed at a weight ratio of 50/50 and carded in a conventional carding machine to prepare a fiber web having a basis weight of 65 g/m². The fiber web was subjected to water needling under a low energy condition to entangle the constituent fibers to prepare spun lace nonwoven fabric having a high degree of fiber freedom. The resulting nonwoven fabric was embossed in the same manner as in Example 1. Thereafter, the nonwoven fabric was impregnated with an aqueous detergent in the same manner as in Example 1 to prepare a floor cleaning sheet. The floor cleaning sheet had a projection area ratio of 73.3% based on the apparent area of the cleaning sheet. The cleaning sheet had a breaking strength of 4410 cN/25 mm in the machine direction (MD) and of 640 cN/25 mm in the cross direction (CD).

### COMPARATIVE EXAMPLE 1

The composite spun lace nonwoven fabric obtained in Example 1 was again subjected to water needling treatment under an energy condition higher than that adopted in Example 4 to obtain composite spun lace nonwoven fabric whose degree of fiber freedom was lower than that in Example 4. Thereafter, the nonwoven fabric was embossed and impregnated with an aqueous detergent in the same manner as in Example 1 to prepare a floor cleaning sheet.

### COMPARATIVE EXAMPLE 2

Composite spun lace nonwoven fabric having a low degree of fiber freedom was prepared with the same construction and under the same conditions as in Example 1, except that the water needling treatment was carried out under an energy condition lower than that adopted in Example 1. Thereafter, the nonwoven fabric was embossed and impregnated with an aqueous detergent in the same manner as in Example I to prepare a floor cleaning sheet.

### COMPARATIVE EXAMPLE 3

The non-embossed composite spun lace nonwoven fabric of Comparative Example 2 was impregnated with an aqueous detergent in the same manner as in Example 1 to prepare a floor cleaning sheet.

### COMPARATIVE EXAMPLE 4

The spun lace nonwoven fabric obtained in Example 5 was again subjected to water needling treatment under an energy condition higher than that in Example 5 to prepare composite spun lace nonwoven fabric having a lower degree of fiber freedom than in Example 5. Thereafter, the nonwoven fabric was embossed and impregnated with an aqueous detergent in the same manner as in Example 1 to prepare a floor cleaning sheet.

The floor cleaning sheets obtained in Examples and Comparative Examples were evaluated with respect to the items (1) to (7) described above. The results obtained are shown in Table 1 below.

**TABLE 1**

| | | Example | | | | | Comparative Example | | | |
|---|---|---|---|---|---|---|---|---|---|---|
| | | 1 | 2 | 3 | 4 | 5 | 1 | 2 | 3 | 4 |
| Sheet Structure | | I | | | | II | I | | | II |
| Basis Weight (g/m²) | | 65 | | | | | | | | |
| Embossing | | done | | | | | done | | undone | done |
| Amount of Impregnated Detergent (%) | | 250 | 250 | 250 | 250 | 250 | 250 | 250 | 250 | 250 |
| Projection Area Ratio (%) | | 76.0 | 75.2 | 74.5 | 72.1 | 73.3 | 70.1 | 79.0 | - | 68.6 |
| Breaking Strength (cN/25mm) | MD | 2850 | 3120 | 3320 | 3750 | 4410 | 7320 | 2320 | 2290 | 7600 |
| | CD | 360 | 410 | 440 | 470 | 640 | 860 | 290 | 290 | 1150 |
| Static Friction Resistance (cN) | MD | 1730 | 1410 | 1350 | 1090 | 1460 | 650 | 2510 | 2650 | 755 |
| | CD | 1840 | 1420 | 1380 | 1250 | 1545 | 710 | 2700 | 2980 | 785 |
| Hair Catching Ratio (%) | | 73 | 64 | 64 | 60 | 64 | 17 | 64 | 67 | 30 |
| Dust Collecting Ratio (%) | | 89 | 87 | 89 | 88 | 87 | 85 | 88 | 89 | 86 |
| Dry Soy Sauce Stains Removing Performance | | A | A | A | A | A | A | A | A | A |
| Manageability of Wiper | | A | A | A | A | A | A | B | C | A |
| Resistance to Fiber Fall-off | | A | A | A | A | A | A | B | C | A |

| | | | | | | | | | | |
|---|---|---|---|---|---|---|---|---|---|---|
| I: composite spun lace nonwoven fabric II: spun lace nonwoven fabric | | | | | | | | | | |

### EXAMPLE 6

A floor cleaning sheet was prepared by impregnating the composite spun lace nonwoven fabric obtained in Example 2 with an aqueous detergent which was prepared in the same manner as in Example 1 except for using no thickener (water/ethanol/2-amino-2-methyl-1-propanol/dodecyl glucoside (degree of condensation: 1.4)=93.8/6/0.1/0.1 (by weight); viscosity: 4 mPa·s/25°C). The amount of the impregnated aqueous detergent was the same as in Example 2. The residual nonvolatile content of the aqueous detergent was 0.1%.

### EXAMPLE 7

Detergents having a viscosity of 25 mPa·s (residual nonvolatile content: 0.11%), 5000 mPa·s (residual nonvolatile content: 0.21%) and 25000 mPa·s (residual nonvolatile content: 0.30%) at 25°C were prepared according to the same formulation of Example 1, except for appropriately altering the proportion of the thickener. The composite spun lace nonwoven fabric obtained in Example 2 was impregnated with each of the detergents to prepare three kinds of floor cleaning sheets. The amount of the impregnated detergent was the same as in Example 2.

The floor cleaning sheets obtained in Examples 6 and 7 were evaluated with respect to the items (1) to (7) described above. Additionally, the floor cleaning sheets obtained in Examples 2, 6, and 7 were evaluated in terms of gradual releasability of detergent according to the method (8) described above. The results obtained are shown in Table 2 below.

**TABLE 2**

| | | Example | | | | |
|---|---|---|---|---|---|---|
| | | 2 | 6 | 7 | | |
| Sheet Structure | | composite spun lace nonwoven fabric | | | | |
| Embossing | | done | done | done | | |
| Projection Area Ratio (%) | | 75.2 | 82.5 | 77.3 3 | 69.5 | 69.2 |
| Viscosity of Aqueous Detergent (mPa·s/25°C) | | 500 | 4 | 25 | 5000 | 25000 |
| Static Friction Resistance (cN) | MD | 1410 | 1480 | 1350 | 1380 | 1360 |
| | CD | 1420 | 1510 | 1470 | 1440 | 1390 |
| Hair Catching Ratio (%) | | 64 | 53 | 64 | 73 | 73 |
| Dust Collecting Ratio (%) | | 87 | 90 | 89 | 85 | 87 |
| Dry Soy Sauce Stains Removing Performance | | A | A | A | A | A |
| Manageability of Wiper | | A | A | A | A | A |
| Resistance to Fiber Fall-off | | A | A | A | A | A |
| Gradual Releasability of Detergent (g) | 1st tatami | 1.18 | 2.18 | 1.54 | 0.72 | 0.55 |
| | 2nd tatami | 0.48 | 0.63 | 0.52 | 0.43 | 0.33 |
| | 3rd tatami | 0.35 | 0.35 | 0.35 | 0.31 | 0.28 |
| | 4th tatami | 0.24 | 0.28 | 0.24 | 0.23 | 0.23 |
| | 5th tatami | 0.22 | 0.23 | 0.20 | 0.21 | 0.18 |
| | 6th tatami | 0.20 | 0.20 | 0.20 | 0.17 | 0.15 |

### COMPARATIVE EXAMPLE 5

A commercially available wet sheet available from Sun Japan K.K. was evaluated for the above-described items (1) to (7). The results obtained are shown in Table 3 below.

**TABLE 3**

| | | Comparative Example 5 |
|---|---|---|
| Sheet Structure | | spun lace nonwoven fabric |
| Basis Weight (g/m²) | | 73 |
| Embossing | | undone |
| Breaking | MD | 5720 |
| Strength (cN/25mm) | CD | 1130 |
| Amount of Impregnated Detergent (%) | | 250 |
| Static Friction | MD | 815 |
| Resistance cN) | CD | 780 |
| Hair Catching Ratio (%) | | 13 |
| Dust Collecting Ratio (%) | | 89 |
| Dry Soy Sauce Stains Removing Performance | | A |
| Manageability of Wiper | | A |
| Resistance to Fiber Fall-off | | A |

As is apparent from the results shown in Tables 1 to 3, it is seen that the floor cleaning sheets of Examples 1 to 7 (the products of the present invention) have high fiber freedom in the surface thereof to exhibit excellent performance in catching hair and dust. It is also seen that they exhibit excellent performance in removal of stains on the floor, satisfactory manageability when attached to a wiper, and hardly undergo fall-off of fiber. It is recognized that use of an aqueous detergent whose viscosity is in a specific range prevents excessive release of the detergent in the beginning of wiping operation thereby to secure sustainability for cleaning a wide area.

### EXAMPLES 8 TO 12

Air-through nonwoven fabric having a basis weight of 27 g/m² was prepared from low-melting fiber having a core/sheath structure made of polypropylene as a core and polyethylene as a sheath and having three-dimensional crimp (2.8 dtex x 51 1 mm; melting point of the sheath component: 130°C). The fibers were thermally bonded among themselves at 140°C. The air-through nonwoven fabric had a breaking strength of 1660 cN/25 mm in the machine direction (MD) and 220 cN/25 mm in the cross direction (CD).

Separately, rayon fiber (1.7 dtex x 40 mm), acrylic fiber (0.9 dtex x 51 mm) and core/sheath fiber having polypropylene as a core and polyethylene as a sheath (1.0 dtex x 38 mm) were mixed at a weight ratio of 50/25/25 and carded in a conventional carding machine to prepare a fiber web having a basis weight of 19 g/m². The fiber web was superposed on each side of the air-through nonwoven fabric. The three layers were subjected to water needling under a low energy condition to entangle the air-through nonwoven fabric and the fiber webs to prepare composite spun lace nonwoven fabric having a basis weight of 65 g/m² of which the surface layer had a high degree of fiber freedom. The whole surface of the nonwoven fabric was given an uneven diamond pattern by means of an ultrasonic embossing machine.

The resulting nonwoven fabric was impregnated with an aqueous detergent (viscosity: 25 mPa·s/25°C) comprising water, ethanol, 2-amino-2-methyl-l-propanol, dodecyl glycoside (degree of condensation: 1.4), and a thickener (Carbopole ETD2020, available from Nikko Chemical K.K.) at a ratio of 93.73/6/0.1/0.1/0.07 (by weight) to prepare a floor cleaning sheet. The amount of the impregnated aqueous detergent was 250% based on the weight of the nonwoven fabric. "Carbopole ETD2020" is an acrylic acid-alkyl (C₁₀-C₃₀) methacrylate copolymer. The aqueous detergent-impregnated cleaning sheet had a breaking strength of 3120 cN/25 mm in the machine direction (MD) and of 410 cN/25 mm in the cross direction (CD).

Detergents having a viscosity of 60 mPa·s (Example 9), 500 mPa·s (Example 10), 5000 mPa·s (Example 11) and 25000 mPa·s (Example 12) at 25°C were prepared from the same composition as described above except that the amounts of the thickener and water were altered appropriately. The same nonwoven fabric as described above was impregnated with each of these detergents in an amount of 250% to prepare floor cleaning sheets.

### COMPARATIVE EXAMPLE 6

Composite spun lace nonwoven fabric having a relatively low degree of fiber freedom was prepared in the same manner as described above, except that the water needling was carried out under a high energy condition to entangle the air-through nonwoven fabric and the fiber webs. The resulting nonwoven fabric was embossed in the same manner as in Example 8 and then impregnated with a detergent having the same. composition as described above except for containing no thickener (water/ethanol/2-amino-2-methyl-1-propanol/dodecyl glycoside (degree of condensation: 1.4)=93.8/6/0.1/0.1) to prepare a floor cleaning sheet.

### COMPARATIVE EXAMPLE 7

The composite spun lace nonwoven fabric having a relatively low degree of fiber freedom which was prepared in Comparative Example 6 was embossed in the same manner as in Example 8 and then impregnated with a detergent having the following composition containing solid particles in an amount of 250% based on the weight of the nonwoven fabric to prepare a floor cleaning sheet.

### Composition of detergent:

Spherical silicone resin (solid particles having an average particle size of 3 µm)/dodecyl glycoside (degree of condensation: 1.4)/xanthan gum/ethanol/water =3/0.5/0.13/20/76.37 (by weight); viscosity at 25°C: 46 mPa·s.

The floor cleaning sheets obtained in Examples 8 to 12 and Comparative Examples 6 and 7 were evaluated for the items (2) to (4) and (8) to (11). The results are shown in Table 4 below.

**TABLE 4**

| | | | Example | | | | | Comp. Example | |
|---|---|---|---|---|---|---|---|---|---|
| | | | 8 | 9 | 10 | 11 | 12 | 6 | 7 |
| Sheet Structure | | | composite spun lace nonwoven fabric | | | | | | |
| Embossing | | | done | | | | | | |
| Projection Area Ratio (%) | | | 77.3 | 76.0 | 75.2 | 69.5 | 69.2 | 77.9 | 75.1 |
| Breaking Strength (cN/25mm) | | MD | 3120 | 3120 | 3120 | 3120 | 3120 | 7320 | 7320 |
| | | CD | 410 | 410 | 410 | 410 | 410 | 860 | 860 |
| Detergent | Viscosity (mPa·s/25°C) | | 25 | 60 | 500 | 5000 | 25000 | 4 | 46 |
| | Residual Nonvolatile Content (%) | | 0.11 | 0.12 | 0.17 | 0.21 | 0.30 | 0.10 | 3.63 |
| Gradual Releasability of Detergent (g) | 1st tatami | | 1.54 | 1.34 | 1.18 | 0.72 | 0.55 | 2.05 | 1.53 |
| | 2nd tatami | | 0.52 | 0.57 | 0.48 | 0.43 | 0.33 | 0.62 | 0.54 |
| | 3rd tatami | | 0.35 | 0.34 | 0.35 | 0.31 | 0.28 | 0.35 | 0.33 |
| | 4th tatami | | 0.24 | 0.26 | 0.24 | 0.23 | 0.23 | 0.26 | 0.26 |
| | 5th tatami | | 0.20 | 0.22 | 0.22 | 0.12 | 0.18 | 0.22 | 0.21 |
| | 6th tatami | | 0.20 | 0.20 | 0.20 | 0.17 | 0.15 | 0.20 | 0.20 |
| Static Friction Resistance of | | MD | 1350 | 1350 | 1410 | 1380 | 1360 | 650 | 650 |
| Sheet (cN) | | CD | 1470 | 1450 | 1420 | 1440 | 1390 | 710 | 710 |
| Hair Catching Ratio (%) | | | 64 | 67 | 64 | 73 | 73 | 17 | 17 |
| Dust Collecting Ratio (%) | | | 89 | 89 | 87 | 85 | 87 | 85 | 85 |
| Dry Soy Sauce Stain Removing Performance after Cleaning 5-tatami Area | | | A | A | A | A | A | A-B | A |
| Finish | | | A | A | A | A | A | A | C |
| Manageability of Wiper at wiping 1st tatami (load for starting wiping: N) | | | A | A | A | A | A | A-B | A |
| | | | (20.3) | (19.2) | (19.1) | (16.6) | (14.9) | (26.6) | (21.1) |

As is apparent from the results shown in Table 4, it is seen that the floor cleaning sheets of Examples 8 to 12 (the products of the invention) prevent excessive release of the detergent in the beginning of wiping operation thereby to secure sustainability for cleaning a wide area. Further, the surface fibers have high freedom, exhibiting excellent hair and dust catching properties. It is also seen that they have excellent performance in removing floor stains and give a satisfactory finish after cleaning and that the wiper to which they are attached is easily manageable.

### EXAMPLES 13 TO 17

Air-through nonwoven fabric having a basis weight of 27 g/m² was prepared from low-melting fiber having a core/sheath structure made of polypropylene as a core and polyethylene as a sheath and having three-dimensional crimp (2.8 dtex x 51 mm; melting point of the sheath component: 130°C). The fibers were thermally bonded among themselves at 140°C. The air-through nonwoven fabric had a breaking strength of 1790 cN/25 mm in the machine direction (MD) and 240 cN/25 mm in the cross direction (CD).

Separately, rayon fiber (1.7 dtex x 40 mm), acrylic fiber (0.9 dtex x 51 mm) and core/sheath fiber having polypropylene as a core and polyethylene as a sheath (1.0 dtex x 38 mm) were mixed at a weight ratio of 50/25/25 and carded in a conventional carding machine to prepare a fiber web having a basis weight of 19 g/m². The fiber web was superposed on each side of the air-through nonwoven fabric. The three layers were subjected to water needling under a low energy condition to entangle the air-through nonwoven fabric and the fiber webs to prepare composite spun lace nonwoven fabric having a basis weight of 65 g/m² of which the surface layer had a high degree of fiber freedom. The whole surface of the nonwoven fabric was given an uneven diamond pattern by means of an ultrasonic embossing machine.

A floor cleaning sheet was prepared by impregnating the resulting nonwoven fabric with an aqueous detergent (viscosity: 500 mPa·s/25°C) comprising water, ethanol, 2-amino-2-methyl-1-propanol, dodecyl glycoside (degree of condensation: 1.4), and a thickener (Carbopole ETD2020. available from Nikko Chemical K.K.) at a ratio of 93.73/6/0.1/0.1/0.07 (by weight). The amount of the impregnated aqueous detergent was 150% (Example 13), 250% (Example 14), 300% (Example 15) or 350% (Example 16) based on the weight of the nonwoven fabric. "Carbopole ETD2020" is an acrylic acid-alkyl (C₁₀-C₃₀) methacrylate copolymer.

An aqueous detergent having a viscosity of 4 mPa·s at 25°C was prepared from the same composition as described above except for containing no thickener. The same nonwoven fabric as described above was impregnated with the resulting detergent in an amount of 250% to prepare a floor cleaning sheet (Example 17).

### COMPARATIVE EXAMPLE 8

The spun lace nonwoven fabric obtained in Example 13 was again subjected to water needling under an energy condition higher than in Example 13 to prepare composite spun lace nonwoven fabric having a lower degree of fiber freedom than that of Example 13. The resulting nonwoven fabric was embossed and impregnated with an aqueous detergent in the same manner as in Example 13 in an amount of 100% based on the weight of the nonwoven fabric to prepare a floor cleaning sheet.

The floor cleaning sheets obtained in Examples 13 to 17 and Comparative Example 8 were evaluated in terms of amount of detergent release in accordance with the above-described method and also evaluated for the items (1) to (4), (8), (9), and (12). In addition, the level difference between projections and depressions was measured in accordance with the above-described method. The results obtained are shown in Table 5.

**TABLE 5**

| | | | Example | | | | | Comp. Example |
|---|---|---|---|---|---|---|---|---|
| | | | 13 | 14 | 15 | 16 | 17 | 8 |
| Sheet Structure | | | composite spun lace nonwoven fabric | | | | | |
| Embossing | | | done | | | | | |
| Projection Area Ratio (%) | | | 62.5 | 73.4 | 79.2 | 82.1 | 75.2 | 39.7 |
| Projection/ Depression Level Difference (mm) | | | 0.40. | 0.37 | 0.37 | 0.36 | 0.34 | 0.21 |
| Breaking Strength (cN/25mm) | | MD | 3180 | 3350 | 3410 | 3450 | 3340 | 6490 |
| | | CD | 430 | 460 | 460 | 460 | 460 | 750 |
| Detergent | Impregnated Amount (%) | | 150 | 250 | 300 | 350 | 250 | 100 |
| | Viscosity (mPa.s/25°C) | | 500 | 500 | 500 | 500 | 4 | 500 |
| | Residual Non-volatile Content (%) | | 0.17 | 0.17 | 0.17 | 0.17 | 0.10 | 0.17 |
| Amount of Detergent Release (g) | | | 0.0053 | 0.0146 | 0.0248 | 0.0377 | 0.0172 | 0.0014 |
| Static Friction Resistance of Sheet (cN) | | MD | 1115 | 1190 | 1220 | 1300 | 1210 | 840 |
| | | CD | 1210 | 1350 | 1420 | 1440 | 1390 | 890 |
| Hair Catching Ratio (%) | | | 73 | 67 | 64 | 53 | 57 | 37 |
| Dust Collecting Ratio (%) | | | 89 | 89 | 87 | 85 | 87 | 85 |
| Dry Soy Sauce Stain Removing Performance after Cleaning 5-tatami Area | | | A | A | A | A | A | B |
| Manageability of Wiper | | | A | A | A-B | A | A | A |
| Friction Resistance (cN) | | | 295 | 325 | 358 | 422 | 360 | 216 |

The present invention provides a floor cleaning sheet of wet type used as attached to a mop-like cleaning tool, which is competitive in price, can be used for cleaning a wide area and exhibits satisfactory performance particularly in catching hair and lint.

The present invention provides a floor cleaning sheet which gradually releases the detergent in a stable manner and has good manageability.

The present invention provides a floor cleaning sheet which has the characteristics of both a dry sheet and a wet sheet and is capable of removing dust, hair, solid foreign matter, and stains from a floor without needing another dry wipe.

The present invention provides a floor cleaning sheet which serves for protection, polish, and disinfection for floors.

## Claims

1. A floor cleaning sheet (1) impregnated with an aqueous detergent to be attached to a cleaning part (11) of a cleaning tool (10) having a handle (12) of stick form connected to the cleaning part wherein
the cleaning sheet (1) is a unitary multilayered sheet comprising a high-strength sheeting material (2) having on at least one side thereof a nonwoven fiber aggregate (3) with a basis weight of 8 to 70 g/m² formed by fiber entanglement of a fiber web which comprises hydrophilic cellulose fibers, in which the fibers of the fiber web (3) are entangled not only among themselves but with the sheeting material (2); the unitary multilayered sheet being obtainable by water needling with the amount of energy of 200 to 1800 kJ/kg, and having a breaking strength of 200 cN/25 mm or higher, and the surface layer of the cleaning sheet having a static friction resistance of 900 to 2500 cN against #1200-grit sandpaper under a weight of 400 g.

2. The floor cleaning sheet according to claim 1, wherein the aqueous detergent contains substantially no water-insoluble solid particles, has a viscosity of 20 to 30000 mPa·s at 25°C, and is present in an amount of 100 to 1000% by weight based on the dry weight of the sheet.

3. The floor cleaning sheet according to claim 1, wherein the cleaning sheet releases 0.004 to 0.04 g/100 cm² of the aqueous detergent under a load of 400 g/100 cm² and has a large number of projections and depressions on the surface thereof, and the aqueous detergent is present in an amount of 100 to 1000% by weight based on the dry weight of the sheet.

4. The floor cleaning sheet according to claim 1, wherein the sheet before being impregnated with the aqueous detergent has a basis weight of 40 to 200 g/m² and the surface layer is made of nonwoven fabric comprising fibers having a fiber length of 20 mm or longer and has a large number of projections and depressions on the surface thereof.

5. The floor cleaning sheet according to claim 1, wherein the surface layer comprises 30 to 98% by weight of hydrophilic cellulose fiber and 2 to 70% by weight of low-melting thermoplastic fiber based on the dry weight of the surface layer and has a large number of projections and depressions which are densified by heat and pressure application, the total area of the projections being 30 to 95% based on the apparent area of the cleaning surface of the cleaning sheet.

6. The floor cleaning sheet according to claim 1, where the aqueous detergents consists of substantially water-soluble components and has a residual nonvolatile content of 10% by weight or less.

7. The floor cleaning sheet according to claim 1, wherein the aqueous detergent contains a polyacrylic acid type thickener, an acrylic acid-alkyl methacrylate copolymer type thickener or a mixture thereof.

## Patentansprüche

1. Bodenreinigungstuch (1), imprägniert mit einem wässrigen Detergens, zum Anbringen an einen Reinigungsteil (11) eines Reinigungswerkzeugs (10) mit einem mit dem Reinigungsteil verbundenen Griff (12) in Stockform, wobei
das Reinigungstuch (1) ein einheitliches, mehrschichtiges Tuch ist, umfassend ein hochfestes Bahnmaterial (2) mit, auf mindestens einer Seite davon, einem ungewebten Faseraggregat (3) mit einem Flächengewicht von 8 bis 70 g/m², gebildet durch Verschlingen der Fasern eines Faservlieses, welches hydrophile Zellulosefasern umfasst, wobei die Fasern des Faservlieses (3) nicht nur untereinander, sondern mit dem Bahnmaterial (2) verschlungen sind; wobei das einheitliche, mehrschichtige Tuch durch Wassernadelung mit einer Energiemenge von 200 bis 1800 kJ/kg erhältlich ist, und eine Reißfestigkeit von 200 cN/25 mm oder höher besitzt, und wobei die Oberflächenschicht des Reinigungstuchs einen statischen Reibungswiderstand von 900 bis 2500 cN gegen #1200-Korn-Schleifpapier unter einem Gewicht von 400 g besitzt.

2. Bodenreinigungstuch gemäß Anspruch 1, wobei das wässrige Detergens im Wesentlichen keine wasserunlöslichen festen Teilchen enthält, eine Viskosität von 20 bis 30000 mPa · s bei 25°C besitzt und in einer Menge von 100 bis 1000 Gew.-%, bezogen auf das Trockengewicht des Tuchs, vorhanden ist.

3. Bodenreinigungstuch gemäß Anspruch 1, wobei das Reinigungstuch 0,004 bis 0,04 g/100 cm² des wässrigen Detergens unter einer Last von 400 g/100 cm² freisetzt und eine große Anzahl von Hervorwölbungen und Vertiefungen auf seiner Oberfläche aufweist, und wobei das wässrige Detergens in einer Menge von 100 bis 1000 Gew.-%, bezogen auf das Trockengewicht des Tuchs, vorhanden ist.

4. Bodenreinigungstuch gemäß Anspruch 1, wobei das Tuch vor dem Imprägnieren mit dem wässrigen Detergens ein Flächengewicht von 40 bis 200 g/m² besitzt, und die Oberflächenschicht aus einem Vliesstoff, umfassend Fasern mit einer Faserlänge von 20 mm oder länger, hergestellt ist, und eine große Anzahl von Hervorwölbungen und Vertiefungen auf seiner Oberfläche aufweist.

5. Bodenreinigungstuch gemäß Anspruch 1, wobei die Oberflächenschicht 30 bis 98 Gew.-% hydrophile Zellulosefaser und 2 bis 70 Gew.-% niedrigschmelzende thermoplastische Faser, bezogen auf das Trockengewicht der Oberflächenschicht, umfasst, und eine große Anzahl von Hervorwölbungen und Vertiefungen aufweist, welche durch Anwendung von Wärme und Druck verdichtet sind, wobei die Gesamtfläche der Hervorwölbungen 30 bis 95 %, bezogen auf die scheinbare Oberfläche der Reinigungsfläche des Reinigungstuchs, ist.

6. Bodenreinigungstuch gemäß Anspruch 1, wobei das wässrige Detergens aus im Wesentlichen wasserlöslichen Bestandteilen besteht und einen Restgehalt an nichtflüchtigen Bestandteilen von 10 Gew.-% oder weniger besitzt.

7. Bodenreinigungstuch gemäß Anspruch 1, wobei das wässrige Detergens ein Verdickungsmittel des Polyacrylsäure-Typs, ein Verdickungsmittel des Acrylsäure-Alkylmethacrylat-Copolymer-Typs oder ein Gemisch davon enthält.

## Revendications

1. Lingette de nettoyage pour les sols (1) imprégnée d'un détergent aqueux à fixer à une partie de nettoyage (11) d'un outil de nettoyage (10) ayant une poignée (12) sous la forme d'un manche, reliée à la partie de nettoyage, dans laquelle
la lingette de nettoyage (1) est une lingette multicouche unitaire comprenant un matériau de feuille à résistance élevée (2) comportant sur au moins un côté un agrégat de fibre non tissée (3) ayant un poids de base de 8 à 70 g/m² formé par entrelacement de fibre d'une bande de fibre qui comprend des fibres de cellulose hydrophiles, dans laquelle les fibres de la bande de fibre (3) sont entrelacées non seulement entre elles, mais avec le matériau de feuille (2), la lingette multicouche unitaire pouvant être obtenue par aiguilletage à l'eau avec la quantité d'énergie de 200 à 1 800 kJ/kg et ayant une résistance à la rupture de 200 cN/25 mm ou plus, et la couche de surface de la lingette de nettoyage ayant une résistance au frottement statique de 900 à 2 500 cN contre un papier abrasif n° 1 200 sous un poids de 400 g.

2. Lingette de nettoyage pour les sols selon la revendication 1, dans laquelle le détergent aqueux ne contient sensiblement aucune particule solide insoluble dans l'eau, présente une viscosité de 20 à 30 000 mPa.s à 25 °C, et est présent en une quantité de 100 à 1 000 % en poids sur la base du poids sec de la lingette.

3. Lingette de nettoyage pour les sols selon la revendication 1, dans laquelle la lingette de nettoyage libère 0,004 à 0,04 g/100 cm² du détergent aqueux sous une charge de 400 g/100 cm² et comporte un grand nombre de saillies et de creux sur sa surface, et le détergent aqueux est présent en une quantité de 100 à 1 000 % en poids sur la base du poids sec de la lingette.

4. Lingette de nettoyage pour les sols selon la revendication 1, dans laquelle la lingette, avant d'être imprégnée du détergent aqueux, présente un poids de base de 40 à 200 g/m², et la couche de surface est constituée d'une étoffe non tissée composée de fibres ayant une longueur de fibre de 20 mm ou plus et comporte un grand nombre de saillies et de creux sur sa surface.

5. Lingette de nettoyage pour les sols selon la revendication 1, dans laquelle la couche de surface comprend 30 à 98 % en poids de fibre de cellulose hydrophile et 2 à 70 % en poids de fibre thermoplastique à point de fusion bas sur la base du poids sec de la couche de surface et comporte un grand nombre de saillies et de creux densifiés par l'application de chaleur et de pression, l'aire totale des saillies étant de 30 à 95 % sur la base de l'aire apparente de la surface de nettoyage de la lingette de nettoyage.

6. Lingette de nettoyage pour les sols selon la revendication 1, dans laquelle le détergent aqueux est constitué de composants sensiblement solubles dans l'eau et présente une teneur en substance non volatile résiduelle de 10 % en poids ou moins.

7. Lingette de nettoyage pour les sols selon la revendication 1, dans laquelle le détergent aqueux contient un épaississant de type poly(acide acrylique), un épaississant de type copolymère d'acide acrylique-méthacrylate d'alkyle ou un mélange de ceux-ci.
